Europäisches Patentamt

European Patent Office

Office européen des brevets

(11) Veröffentlichungsnummer: **0 471 106 A1**

# EUROPÄISCHE PATENTANMELDUNG

(21) Anmeldenummer: **90115699.2**

(22) Anmeldetag: **16.08.90**

(51) Int. Cl.⁵: **H02M 7/525**, H02M 1/084, H02J 3/26

(43) Veröffentlichungstag der Anmeldung:
**19.02.92 Patentblatt 92/08**

(84) Benannte Vertragsstaaten:
**AT BE CH DE DK ES FR GB GR IT LI LU NL SE**

(71) Anmelder: **SIEMENS AKTIENGESELLSCHAFT**
**Wittelsbacherplatz 2**
**W-8000 München 2(DE)**

(72) Erfinder: **Braun, Rüdiger, Dipl.-Ing. (FH)**
**Egidienstrasse 35**
**W-8520 Erlangen(DE)**
Erfinder: **Forstbauer, Wilhelm, Dr.-Ing.**
**Ebrardstrasse 122**
**W-8520 Erlangen(DE)**

(54) **Verfahren und Vorrichtung zur Symmetrierung eines Drehstromsystems.**

(57) Die Erfindung bezieht sich auf ein Verfahren und eine Vorrichtung zur Symmetrierung eines Drehstromsystems (18), das mittels eines Wechselrichters (12) aus einer Gleichspannungsquelle (10) erzeugt wird, wobei der Ausgang (R',S',T') dieses Wechselrichters (12) mit einem Filter (14) mit nachgeschaltetem Sternpunktbildner (16) versehen ist. Erfindungsgemäß werden aus den gemessenen Spannungen ($u_R$,$u_S$,$u_T$) Mit- und Gegensystemkomponenten ($\overline{u}_{1c}$,$\overline{u}_{1s}$,$\overline{u}_{2c}$,$\overline{u}_{2s}$) gebildet, die jeweils eine Mit- und Gegensystem- Stellgröße ($U_{St\phi}$,$U_{St1c}$,$U_{St2s}$,$U_{St2c}$) erzeugen, wobei die Mit- und Gegensystem- Stellgrößen ($U_{St1c}$,$U_{St2s}$,$U_{St2c}$) mittels einer Transformationseinrichtung (50) in Sternspannungs-Stellgrößen ($U_{Str}$,$U_{Sts}$,$U_{Stt}$) gewandelt und winkelsymmetrischen Steuersätzen (76,78,80) zugeführt werden. Somit kann mit Mitteln der Mehrgrößen-Regelsysteme ein erzeugtes Drehstromsystem (18) bei Schieflast symmetrisch bleiben.

EP 0 471 106 A1

Die Erfindung bezieht sich auf ein Verfahren und eine Vorrichtung zur Symmetrierung eines Drehstromsystems, das mittels eines Wechselrichters aus einer Gleichspannungsquelle erzeugt wird, wobei der Ausgang dieses Wechselrichters mit einem Filter mit nachgeschaltetem Sternpunktbildner versehen ist.

Aus der europäischen Patentschrift 0 208 088 ist eine Vorrichtung zur Erzeugung eines symmetrischen dreiphasigen Ausgangsspannungssystems mit belastbaren Null-Leiter bekannt. Diese Vorrichtung enthält eine Wechselrichteranordnung und eine Spannungstransformationseinrichtung, insbesondere einen potentialfreien Drehspannungstransformator mit sekundärseitiger Sternpunktschaltung, die primärseitig an die Wechselrichteranordnung angeschlossen ist. Außerdem ist ein Filter mit der Spannungstransformationseinrichtung in Reihe geschaltet. Ein Sollwertgeber gibt drei winkelsymmetrische Sollwerte vor. Jeweils einem Sollwert und einem Wechselstromausgang der Wechselrichteranordnung ist eine Regeleinrichtung zugeordnet, der ein Steuersatz nachgeschaltet ist. Als Wechselrichteranordnung ist ein pulsbreitenmodulierter, dreiphasiger Brückenumrichter vorgesehen. Ein die Struktur der Spannungstransformationseinrichtung abbildendes Entkopplungsnetzwerk bildet aus Momentanwerten, die den Sternspannungen am Ausgang der Reihenschaltung entsprechen, transformierte Momentanwerte, die einem Spannungssystem am Eingang der Spannungstransformationseinrichtung entsprechen. Die Regeleinrichtung und das Entkopplungsnetzwerk sind derart zusammengeschaltet, daß sie aus den Sollwerten und aus Meßwerten für die Sternspannungen des Ausgangsspannungssystems Steuerspannungen für die auf jeweils einen Ausgang der Wechselrichteranordnung arbeitenden Zweigpaare liefern, wobei mit den Steuerspannungen die Abweichung der transformierten Meßwerte von den Sollwerten ausregelbar ist. Mittels dieser Vorrichtung können an den Klemmen des Ausgangsspannungssystems auftretende momentane Unsymmetrien rasch ausgeregelt werden, indem jedes Paar der Wechselrichteranordnung von einem eigenen Steuersatz in der Art eines unsymmetrischen Spannungssystems mit einer Steuerspannung angesteuert wird, die rasch verändert wird. Das Entkopplungsnetzwerk gestattet es, die sekundärseitig mit dem belastbaren Sternpunkt verknüpften Meßgrößen in Ersatz-Meßgrößen eines nullleiterfreien Systems umzurechnen. Dadurch stehen Ersatz-Istwerte eines fiktiven Spannungssystems am Eingang der Spannungstransformationseinrichtung für die Regelung bereit. Die gebildeten Steuerspannungen sind unsymmetrisch.

Aus dem Aufsatz "Koordinatentransformationen für Mehrgrößen-Regelsysteme zur Kompensation und Symmetrierung von Drehstromnetzen", abgedruckt in Siemens Forsch.- u. Entwickl.-Ber.,Bd.6 (1977), Nr. 1, Seiten 29 bis 38, ist ein Regelsystem bekannt, das die Aufgabe hat, die Thyristoren einer Blindstromkompensationsanlage immer so auszusteuern, daß die Blindstrombelastung des Netzes möglichst gering, möglichst konstant und daß die Netzbelastung insgesamt möglichst symmetrisch ist. Das Regelsystem (Bild 19 des Aufsatzes) enthält zwei vektorielle Verarbeitungseinrichtungen, die die Ofenströme und die Thyristorströme in Wirk- und Blindstromkomponenten eines Mit- und Gegensystems wandeln. Die Wirk- und Blindstromkomponenten des Mit- und Gegensystems der Ofenströme sind als Führungsgrößen für die Regelung der Kompensationsanlage vorgesehen. Jede der beiden vektoriellen Verarbeitungseinrichtungen bestehen jeweils aus einer eingangsseitigen Transformationseinrichtung (Transformation von einem Dreiphasensystem in zwei Zeiger), deren Ausgänge jeweils ein Vektoridentifizierer mit nachgeschaltetem Vektordreher nachgeschaltet ist, wobei die Ausgänge der Vektordreher mit einer Transformationseinrichtung (Transformation von ruhenden Vektoren in Mitsystemkomponenten und Gegensystemkomponenten) verknüpft sind. Außerdem sind in diesem Aufsatz Ausführungsbeispiele für einen Vektoridentifizierer und einen Vektordreher angegeben. Für die Transformationen sind Transformationsmatrizen angegeben. Da das Regelsystem im wesentlichen nur Führungsgrößenänderungen zu verarbeiten hat und Störgrößenänderungen nur in Form geringfügiger Schwankungen der Sammelschienenspannung auftreten, ist eine Vorsteuerung vorgesehen, so daß die Regler nur noch geringe Abweichungen ausregeln müssen. Mittels dieses Regelsystems wird der Blindanteil des Mitsystems vom Netzstrom möglichst auf einen kleinen und konstanten Wert geregelt, wogegen die Komponenten des Gegensystems gleichzeit auf sehr kleine Werte geregelt werden. Soll die Netzbelastung außerdem symmetrisch sein, so müssen die Thyristorschaltungen in allen Phasen unabhängig gesteuert werden.

Der Erfindung liegt nun die Aufgabe zugrunde, ein Verfahren und eine Vorrichtung zur Symmetrierung eines Drehstromsystems anzugeben, wobei mit Mitteln des Mehrgrößen-Regelsystems das erzeugte Drehstromsystem schnell und einfach symmetriert werden kann.

Diese Aufgabe wird erfindungsgemäß mit den im Anspruch 1 angegebenen Verfahrensschritten gelöst. Die gemessenen Spannungen werden in zwei Spannungskomponenten transformiert, die seinerseits jeweils in einen Drehvektor gewandelt werden. Diese Drehvektoren werden in ruhende Vektoren (Zeiger), die wiederum in Mitsystem- und Gegensystemkomponenten transformiert werden, gewandelt. Diese Mit- und Gegensystemkomponenten bilden die Regelgrößen des erzeugten Drehstromsystems, das unabhängig von der Last (Schieflast, Einphasenbelastung) symmetrisch bleiben soll. Das erzeugte Drehstromsystem ist genau dann symmetrisch, wenn nur Mitsystemkomponenten in den Leiterspannungen auftauchen. D.h., die erzeugten Gegensystem-Regelgrößen werden zu Null geregelt. Die Mitsystem-Betragsregelgröße wird auf einen vorbestimmten Führungswert geregelt und die Mitsystem-Phasenregelgröße wird zu Null geregelt. Dadurch erhält man Mit- und Gegensystem-Stellgrößen, die mit Ausnahme der Mitsystemphasen-Stellgröße in Sternspannungs-Stellgrößen transformiert werden, die mittels winkelsymmetrischer Steuersätze dem Wechselrichter als Steuersignale zugeführt werden. Die Mitsystem-Phasenstellgröße verstellt die Phasenlage der drei Stellsignale gemeinsam. Somit ist es möglich ein erzeugtes Drehstromsystem auch bei Einphasenbelastung symmetrisch zu halten.

Der Aufbau einer erfindungsgemäßen Vorrichtung zur Durchführung des Verfahrens ist dem Anspruch 2 zu entnehmen, wobei dessen vorteilhafte Ausgestaltungen den Unteransprüchen 3 bis 7 zu entnehmen sind.

Zur weiteren Erläuterung der Erfindung wird auf die Zeichnung Bezug genommen, in der ein Ausführungsbeispiel einer Vorrichtung zur Durchführung des erfindungsgemäßen Verfahrens schematisch dargestellt ist.

Figur 1     zeigt den Leistungsteil der Vorrichtung mit einer Ausführungsform seines Regelteils und

Figur 2     zeigt eine Ausführungsform einer Transformationseinrichtung des Regelteils nach Figur 1.

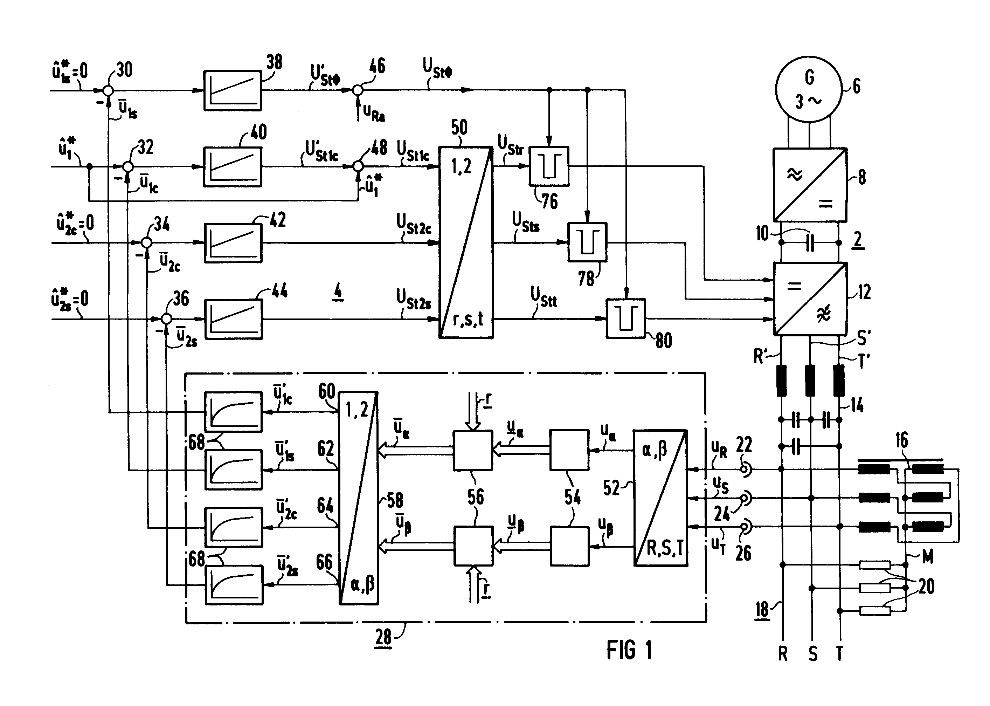

Die Figur 1 zeigt eine Vorrichtung zur Erzeugung eines Drehstromsystems mit den Ausgängen R, S und T, bestehend aus einem Leistungsteil 2 und einem Regelteil 4.

Der Leistungsteil 2 besteht aus einem Generator 6, beispielsweise einem rotierenden gleichrichtererregten Synchrongenerator, dem ein Gleichrichter 8 mit nachgeschalteter Gleichspannungsquelle 10, beispielsweise ein Spannungszwischenkreis, nachgeschaltet ist. Anstelle des Gleichrichters 8 kann auch ein Wechselrichter bzw. ein Umkehrstromrichter verwendet werden. Am Spannungszwischenkreis 10 ist eingangsseitig ein Wechselrichter 12 angeschlossen, der ausgangsseitig mit einem Filter 14 versehen ist. Dem Filter 14 ist ein Sternpunktbildner 16 nachgeschaltet, der einen Sternpunkt M bildet. Dadurch ist eine Einphasenbelastung möglich. Zwischen den einzelnen Drehstromausgängen R, S und T des gebildeten Drehstromsystems 18 und dem Sternpunkt M ist jeweils eine Last 20 angeschlossen. Der Generator 6 kann beispielsweise von einem Schubtriebwerk angetrieben werden, womit das erzeugte Drehstromsystem 18 ein Flugzeugbordnetz von beispielsweise $3 \times 115$ V, 400 Hz ist. Der Generator 6 kann aber auch von Windkraft angetrieben werden oder der Spannungszwischenkreis 10 kann eine Brennstoffzelle sein, so daß das Drehstromsystem 18 ein Inselnetz darstellt. Anstelle des Generators 6 kann auch ein Versorgungsnetz vorgesehen sein, so daß das erzeugte Drehstromsystem 18 (unterbrechungsfreie Stromversorgung) ein gesichertes Drehstromsystem ist.

Der Regelteil 4 enthält eingangsseitig drei Wandler 22, 24 und 26 mit denen die drei Ausgangsspannungen des Filters 14, nämlich die Spannungen $u_R$, $u_S$ und $u_T$ erfaßt werden. Diese gemessenen Spannungen $u_R$, $u_S$ und $u_T$ werden einer vektoriellen Verarbeitungseinrichtung 28 zugeführt, an deren Ausgänge Mit- und Gegensystemkomponenten $\bar{u}_{1s}$, $\bar{u}_{1c}$, $\bar{u}_{2s}$ und $\bar{u}_{2c}$ der Spannungen $u_R$, $u_S$ und $u_T$ anstehen.

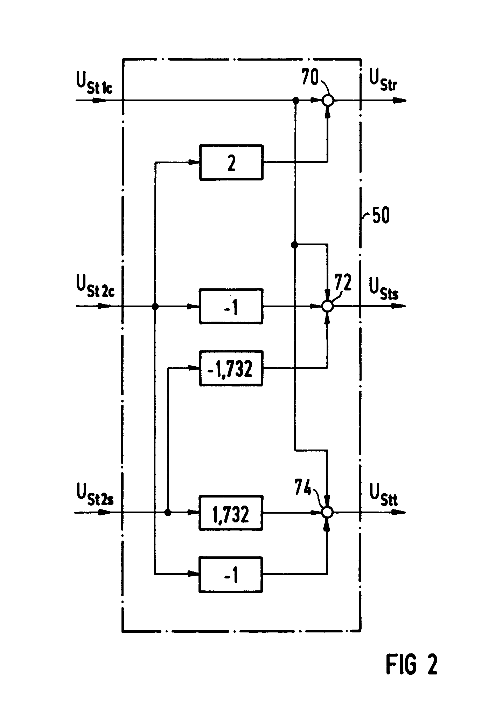

Die Mitsystemkomponente $\bar{u}_{1s}$ bzw. $\bar{u}_{1c}$ ist als Istwert einem Vergleicher 30 bzw. 32 und die Gegensystemkomponente $\bar{u}_{2c}$ bzw. $\bar{u}_{2s}$ ist ebenfalls als Istwert einem Vergleicher 34 bzw. 36 zugeführt. Am Plus-Eingang des Vergleichers 30 bzw. 32 bzw. 34 bzw. 36 steht eine Führungsgröße $\hat{u}_{1s}^*$ bzw. $\hat{u}_1^*$ bzw. $\hat{u}_{2c}^*$ bzw. $\hat{u}_{2s}^*$ an. Der Ausgang des Vergleichers 30 bzw. 32 bzw. 34 bzw. 36 ist mit einem Regler 38 bzw. 40 bzw. 42 bzw. 44 verknüpft. Dem Regler 38 bzw. 40 ist ein Addierer 46 bzw. 48 nachgeschaltet, an dessen zweitem Eingang ein Vorsteuerwert $u_{Ra}$ bzw. $\hat{u}_1^*$ ansteht. Der Ausgang des Addierers 48 und die Ausgänge der Regler 42 und 44 sind mit einer Transformationseinrichtung 50 verbunden, wobei eine Ausführungsform dieser Transformationseinrichtung 50 in Figur 2 näher dargestellt ist. An den Ausgängen dieser Transformationseinrichtung 50 stehen Sternspannungs-Stellgrößen $U_{Str}$, $U_{Sts}$ und $U_{Stt}$ an und am Ausgang des Addierers 46 steht eine Phasen-Stellgröße $U_{St\phi}$. Diese Stellgrößen $U_{Str}$, $U_{Sts}$ und $U_{Stt}$ sind mit je einem Steuersatz 76, 78, 80 des Wechselrichters 12 verbunden. Die drei Steuersätze 76, 78, 80 werden winkelsymmetrisch gesteuert. Die Mitsystem-Phasen-Stellgröße $U_{St\phi}$ steuert gemeinsam die Phasenlage der Steuersätze 76, 78, 80.

Die vektorielle Verarbeitungseinrichtung 28 weist eingangsseitig eine Transformationseinrichtung 52 auf, deren Ausgänge jeweils mit einem Vektoridentifizierer 54 mit nachgeschaltetem Vektordreher 56 versehen sind. Die Ausgänge der Vektordreher 56 sind mit einer weiteren Transformationseinrichtung 58 verbunden, deren Mitsystem-Ausgänge 60 und 62 und deren Gegensystem-Ausgänge 64 und 66 jeweils mit einer Istwertglättung 68 versehen sind. Die Ausgänge der Vektoridentifizierer 54 können auch mit einer Transformationseinrichtung 58 mit nachgeschaltetem Vektordreher 56 verknüpft sein. Die Ausgänge der Istwertglättung 68, die die Ausgänge der vektoriellen Verarbeitungseinrichtung 28 bilden, sind mit einem Minus-Eingang der Vergleicher 30, 32, 34 und 36 verknüpft.

Eine derartige vektorielle Verarbeitungseinrichtung 28 ist aus dem Aufsatz "Koordinatentransformation für Mehrgrößen-Regelsysteme zur Kompensation und Symmetrierung von Drehstromnetzen", abgedruckt in Siemens Forsch.- u. Entwickl.-Ber., Bd. 6 (1977), Nr. 1, Seiten 29 bis 38, bekannt. Außerdem sind in diesem Aufsatz Ausführungsbeispiele für den Vektoridentifizierer 54, den Vektordreher 56, der eingangsseitigen Transformationseinrichtung 52 und der weiteren Transformationseinrichtung 58 angegeben. Deshalb kann an dieser Stelle auf eine Beschreibung von Ausführungsformen der Elemente der vektoriellen Verarbeitungseinrichtung 28 verzichtet werden.

Die gemessenen Spannungen $u_R$, $u_S$ und $u_T$ bilden ein dreiphasiges Spannungssystem R, S und T, das mittels der eingangsseitigen Transformationseinrichtung 52 der vektoriellen Verarbeitungseinrichtung 28 in zwei Spannungskomponenten $u_\alpha$ und $u_\beta$ transformiert wird. Jede Spannungskomponente stellt eine Schwingung dar, z.B. dargestellt durch

$$u'_\alpha = \hat{u}_\alpha \cdot \cos(\omega t + \phi_\alpha)$$

und

$$u'_\beta = \hat{u}_\beta \cdot \cos(\omega t + \phi_\beta).$$

Der Vektoridentifizierer 56 ermittelt zu den gegebenen Cosinusschwingungen jeweils die zugehörige Sinusschwingung, dargestellt durch

$$u''_\alpha = \hat{u}_\alpha \cdot \sin(\omega t + \phi_\alpha)$$

und

$$u''_\beta = \hat{u}_\beta \cdot \sin(\omega t + \phi_\beta).$$

Jeweils beide Schwingungen zusammen bilden einen Drehvektor $\underline{u}_\alpha$ und $\underline{u}_\beta$, in dem die gegebene Cosinusschwingung als Realteil und die dazu ermittelte Sinusschwingung als Imaginärteil definiert werden, dargestellt durch

$$\underline{u}_\alpha = \hat{u}_\alpha \cdot (\cos(\omega t + \phi_\alpha) + j\sin(\omega t + \phi_\alpha))$$

und

$$\underline{u}_\beta = \hat{u}_\beta \cdot (\cos(\omega t + \phi_\beta) + j\sin(\omega t + \phi_\beta)).$$

Diese Drehvektoren $\underline{u}_\alpha$ und $\underline{u}_\beta$ werden mittels des Vektordrehers 56, dem ein Referenzvektor $\underline{r} = \cos(\omega t) + j\sin(\omega t)$ zugeführt ist, in ruhende Vektoren, auch Zeiger $\overline{u}_\alpha$ und $\overline{u}_\beta$ gennant, umgerechnet. Der Referenzvektor $\underline{r}$ wird auch Einheitsvektor genannt. Diese Zeiger $\overline{u}_\alpha$ und $\overline{u}_\beta$ können folgendermaßen dargestellt werden:

$$\overline{u}_\alpha = \hat{u}_\alpha \cdot (\cos\phi_\alpha + j\sin\phi_\alpha)$$

und

$$\overline{u}_\beta = \hat{u}_\beta \cdot (\cos\phi_\beta + j\sin\phi_\beta).$$

Diese Zeiger $\overline{u}_\alpha$ und $\overline{u}_\beta$ werden nun noch mittels der weiteren Transformationseinrichtung 58 in Mit- und Gegensystemkomponenten $\overline{u}'_{1c}$, $\overline{u}'_{1s}$, $\overline{u}'_{2c}$ und $\overline{u}'_{2s}$ transformiert. Diese Mit- und Gegensystemkomponenten $\overline{u}'_{1c}$, $\overline{u}'_{1s}$, $\overline{u}'_{2c}$ und $\overline{u}'_{2s}$ lassen sich folgendermaßen darstellen:

$\overline{u}_{1c} = \hat{u}_1 \cos\phi_1,$
$\overline{u}_{1s} = \hat{u}_1 \sin\phi_1,$
$\overline{u}_{2c} = \hat{u}_2 \cos\phi_2$

und

$$\overline{u}_{2s} = \hat{u}_2 \sin\phi_2,$$

wobei mit ' die ungefilterten Komponenten gekennzeichnet werden.

Wählt man nun für den Phasenwinkel $\phi_1$ des Mitsystems 0° el., so gibt die Mitsystemkomponente $\overline{u}_{1c}$ die Größe für den Betrag des Mitsystems an. Wählt man für den Phasenwinkel $\phi_1$ des Mitsystems 90° el., so gibt die Mitsystemkomponente $\overline{u}_{1s}$ die Größe für den Betrag des Mitsystems an. Es kann für den Phasenwinkel $\phi_1$ des Mitsystems jedoch auch jeder beliebige Wert zwischen 0° el. und 360° el. gewählt werden. Im Hinblick auf eine einfache Regelung ist hier der Phasenwinkel $\phi_1 = 0°$ el., wodurch die Führungsgröße $\overline{u}_{1s}^*$ für die Mitsystemphase Null ist. D.h., die erzeugte Mitsystemkomponente $\overline{u}_{1s}$ wird auf Null und die Mitsystemkomponente $\overline{u}_{1c}$ wird auf eine vorbestimmte Mitsystem-Betrags-Führungsgröße $\hat{u}_1^*$ geregelt.

Da das erzeugte Drehstromsystem 18 unabhängig vom Belastungszustand immer symmetrisch bleiben soll, dürften nur Mitsystemkomponenten in den gemessenen Spannungen $u_R$, $u_S$ und $u_T$ vorhanden sein. Daraus folgt, daß die Gegensystemkomponenten $\overline{u}_{2c}$ und $\overline{u}_{2s}$ zu Null geregelt werden. Gemäß der an den Vergleichern 30, 32, 34 und 36 anstehenden Komponenten werden die Regler 38, 40, 42 und 44 auch als Mitsystem-Phasenregler 38, Mitsystem-Betragsregler 40 und Gegensystem-Betragsregler 42 und 44 bezeichnet.

Da für die Symmetrierung nur das Mitsystem von Bedeutung ist und die Regelgröße des Mitsystems jeweils um eine Führungsgröße schwankt, ist dem Mitsystem-Phasenregler 38 und dem Mitsystem-Betragsregler 40 jeweils ein Addierer 46 bzw. 48 nachgeschaltet, wodurch auf die erzeugte Stellgröße

$$U'_{St\phi}$$

ein Vorsteuerwert $u_{Ra}$ und auf die erzeugte Stellgröße

$$U'_{St1c}$$

ein Vorsteuerwert $\hat{u}_1^*$ (Mitsystem-Betrags-Führungsgröße) addiert werden.

Da das Spannungssystem R', S' und T' am Ausgang des Wechselrichters 12 nur einen fiktiven Sternpunkt aufweist, kann bei diesen Mehrgrößen-Regelsystemen das Nullsystem außer Acht gelassen werden, da es keinen Einfluß auf die Symmetrierung des erzeugten Drehstromsystems 18 hat.

In Figur 2 ist ein Ausführungsbeispiel der Transformationseinrichtung 50 näher dargestellt, mit der aus den mittels des Mitsystem-Betragsreglers 40 und der Gegensystem-Betragsregler 42 und 44 erzeugten Mit- und Gegensystem-Stellgrößen $U_{St1c}$, $U_{St2c}$ und $U_{St2s}$ Sternspannungs-Stellgrößen $U_{Str}$, $U_{Sts}$ und $U_{Stt}$ gebildet werden. Dabei werden die Sternspannungs-Stellgrößen $U_{Str}$, $U_{Sts}$ und $U_{Stt}$ aus den Mit- und Gegensystem-Stellgrößen $U_{St1c}$, $U_{St2c}$ und $U_{St2s}$ gemäß folgender Gleichungen:

$$U_{Str} = U_{St1c} + 2\,U_{St2c}$$
$$U_{Sts} = U_{St1c} - U_{St2c} - \sqrt{3} \cdot U_{St2s}$$
$$U_{Stt} = U_{St1c} - U_{St2c} + \sqrt{3} \cdot U_{St2s}$$

erzeugt, mit

$$U_{St1c} = \hat{u}_1 \cos\phi_1,$$
$$U_{St2c} = \hat{u}_2 \cos\phi_2,$$
$$U_{St2s} = \hat{u}_2 \sin\phi_2.$$

Gemäß diesen Gleichungen besteht die Transformationseinrichtung 50 aus drei Addierern 70, 72 und 74 und aus vorzeichenbehafteten Wichtungsfaktoren. Die Mitsystem-Stellgröße $U_{St1c}$ wird jeweils an einem Eingang der drei Addierer 70, 72 und 74 geführt. Am zweiten Eingang des Addierers 70 steht die mit dem Faktor 2 gewichtete Gegensystem-Stellgröße $U_{St2c}$ an, die außerdem mit dem Faktor -1 gewichtet jeweils am zweiten Eingang der Addierer 72 und 74 ansteht. Am dritten Eingang des Addierers 72 und 74 steht jeweils die mit dem Faktor $\sqrt{3} = 1{,}732$ gewichtete Gegensystem-Stellgröße $U_{St2s}$ an, wobei dieser Faktor

$\sqrt{3}$ für die Ermittlung der Sternspannung-Stellgröße $U_{Sts}$ negativ ist.

Mit diesen Mehrgrößen-Regelsystemen, bestehend aus bekannten Komponenten, kann man unabhängig von der Belastung des erzeugten Drehstromsystems 18 dieses immer symmetrisch halten, wenn die Gegensystemkomponenten Null und die Mitsystem-Betragskomponente auf einen vorbestimmten Führungswert geregelt werden. Da dieses Regelsystem größtenteils softwaremäßig ausgeführt sein kann, erhält man einen kompakten Aufbau. Diese Einrichtung wird für Bordnetze verwendet. Außerdem kann man diese Einrichtung auch zur Erzeugung eines Inselnetzes oder eines gesicherten Drehstromsystems verwenden.

**Patentansprüche**

1. Verfahren zur Symmetrierung eines Drehstromsystems (18), das mittels eines Wechselrichters (12) aus einer Gleichspannungsquelle (10) erzeugt wird, wobei der Ausgang dieses Wechselrichters (12) mit einem Filter (14) mit nachgeschaltetem Sternpunktbildner (16) versehen ist, mit folgenden Verfahrensschritten:

   a) Transformation der drei gemessenen Spannungen ($u_R$, $u_S$, $u_T$) in zwei Spannungskomponenten ($u_\alpha$, $u_\beta$),

   b) Bildung eines Drehvektors ($\underline{u}_\alpha$, $\underline{u}_\beta$) jeweils aus einer Spannungskomponente ($u_\alpha$, $u_\beta$),

   c) Umwandlung jedes gebildeten Drehvektors ($\underline{u}_\alpha$, $\underline{u}_\beta$) mittels eines Referenzvektors ($\underline{r}$) in einen Zeiger ($\overline{u}_\alpha$, $\overline{u}_\beta$),

   d) Transformation der beiden Zeiger ($\overline{u}_\alpha$, $\overline{u}_\beta$) in Mit- und Gegensystemkomponenten ($\overline{u}_{1c}$, $\overline{u}_{1s}$, $\overline{u}_{2c}$, $\overline{u}_{2s}$),

   e) Regelung dieser Mit- und Gegensystemkomponenten ($\overline{u}_{1c}$, $\overline{u}_{1s}$, $\overline{u}_{2c}$, $\overline{u}_{2s}$) auf jeweils einen vorbestimmten Führungswert ($\hat{u}_1^*$, $\hat{u}_{1s}^*$, $\hat{u}_{2c}^*$, $\hat{u}_{2c}^*$) derart, daß diese Mit- und Gegensystemkomponenten ($\overline{u}_{1c}$, $\overline{u}_{1s}$, $\overline{u}_{2c}$, $\overline{u}_{2s}$) mit Ausnahme der Mitsystembetragsgröße ($\overline{u}_{1c}$) zu Null geregelt werden,

   f) Transformation der erzeugten Mit- und Gegensystem-Stellgroßen ($U_{St1c}$, $U_{St2c}$, $U_{St2s}$) in drei Sternspannungs-Stellgroßen ($U_{Str}$, $U_{Sts}$, $U_{Stt}$), wobei die Sternspannungs-Stellgrößen ($U_{Str}$, $U_{Sts}$, $U_{Stt}$) aus den Mit- und Gegensystem-Stellgrößen ($U_{St1c}$, $U_{St2c}$, $U_{St2s}$) gemäß folgender Gleichungen

$$U_{Str} = U_{St1c} + 2\,U_{St2c}$$
$$U_{Sts} = U_{St1c} - U_{St2c} - \sqrt{3}\cdot U_{St2s}$$
$$U_{Stt} = U_{St1c} - U_{St2c} + \sqrt{3}\cdot U_{St2s}$$

   hergeleitet werden und

   g) Zuführung der drei Sternspannungs-Stellgrößen ($U_{Str}$, $U_{Sts}$, $U_{Stt}$) an drei winkelsymmetrische Steuersätze (76,78,80).

2. Verfahren nach Anspruch 1, **dadurch gekennzeichnet**, daß die gebildeten Drehvektoren ($u_\alpha$, $u_\beta$) in Mit- und Gegensystemkomponenten ($\overline{u}_{1c}$, $\overline{u}_{1s}$, $\overline{u}_{2c}$, $\overline{u}_{2s}$) transformiert werden, die dann mittels eines Referenzvektors ($\underline{r}$) in Zieger gewandelt werden.

3. Vorrichtung zur Durchführung des Verfahrens nach Anspruch 1 mit einem Wechselrichter (12), der ausgangsseitig mit einem Filter (14) versehen ist, dem ein Sternpunktbildner (16) nachgeschaltet ist, **dadurch gekennzeichnet,** daß jedem Wechselstromausgang (R, S, T) ein Wandler (22, 24, 26) zur Ermittlung der Spannung ($u_R$, $u_S$, $u_T$) des erzeugten Drehstromsystems (18) zugeordnet ist, denen eine vektorielle Verarbeitungseinrichtung (28) nachgeschaltet ist, deren Ausgänge jeweils mit einem Minus-Eingang eines Vergleichers (30, 32, 34, 36) verknüpft sind, wobei jeweils am Plus-Eingang dieser Vergleicher (30, 32, 34, 36) eine Führungsgröße ($\hat{u}_{1s}^*$, $\hat{u}_1^*$, $\hat{u}_{2s}^*$, $\hat{u}_{2s}^*$) ansteht, und daß den Vergleichern (30, 32, 34, 36) jeweils ein Regler (38, 40, 42, 44) nachgeschaltet ist, deren Ausgänge mit Ausnahme des Mitsystem-Phasenreglers (38) mit einer Transformationseinrichtung (50) verknüpft sind, deren Ausgänge jeweils mit einem Steuersatz (76,78,80) verbunden sind, wobei die Steuersätze (76,78,80) jeweils mit dem Ausgang des Mitsystem-Phasenreglers (38) verknüpft sind.

4. Vorrichtung nach Anspruch 3, **dadurch gekennzeichnet**, daß die vektorielle Verarbeitungseinrichtung (28) eingangsseitig eine Transformationseinrichtung (52) aufweist, deren beiden Ausgänge jeweils ein Vektoridentifizierer (54) mit nachgeschaltetem Vektordreher (56) nachgeschaltet sind, wobei die Ausgänge der beiden Vektordreher (56) mit einer weiteren Transformationseinrichtung (60) verbunden sind, deren beiden Mitsystemausgängen (60, 62) und deren beiden Gegensystemausgängen (64, 66) die Ausgänge der vektoriellen Verarbeitungseinrichtung (28) bilden.

5. Vorrichtung nach Anspruch 4, **dadurch gekennzeichnet**, daß die Mitsystemausgänge (60, 62) und die Gegensystemausgänge (60, 62) jeweils mit einer Istwertglättung (68) versehen sind.

6. Vorrichtung nach Anspruch 4, **dadurch gekennzeichnet,** daß jedem Ausgang der Vektoridentifizierer (54) der vektoriellen Verarbeitungseinrichtung (28) jeweils eine transformationseinrichtung (58) mit nachgeschaltetem Vektordreher (56) nachgeschaltet ist.

7. Vorrichtung nach Anspruch 3, **dadurch gekennzeichnet,** daß dem Mitsystem-Phasenregler (38) und dem Mitsystem-Betragsregler (40) jeweils ein Addierer (46, 48) nachgeschaltet ist, an dessen zweiten Eingang ein Vorsteuerwert ($u_{Ra}$, $\hat{u}_1^*$) ansteht.

8. Vorrichtung nach Anspruch 3, **dadurch gekennzeichnet,** daß als Regler (38, 40, 42, 44) jeweils ein PI-Regler vorgesehen ist.

FIG 1

FIG 2

**Europäisches
Patentamt**

# EUROPÄISCHER
# RECHERCHENBERICHT

Nummer der Anmeldung

## EP 90 11 5699

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | EP-A-0 208 088  (SIEMENS)<br>* Zusammenfassung; Figur 1 *<br>– – – | 1-4,6-8 | H 02 M 7/525<br>H 02 M 1/084<br>H 02 J 3/26 |
| D,Y | SIEMENS FORSCH.- UND ENTWICKL.-BER., Band 6, Nr. 1, 1977, Seiten 29-38, Berlin, DE; W. MEUSEL et al.: "Koordinatentransformationen für Mehrgrössen-Regelsysteme zur Kompensation und Symmetrierung von Drehstromnetzen"<br>* Figur 19 *<br>– – – | 1-4,6-8 | |
| A | DE-A-3 236 071  (SIEMENS)<br>* Zusammenfassung; Seite 9, Zeilen 1-22; Seite 10, Zeile 22 - Seite 11, Zeile 18; figur 2 *<br>– – – | 1,2 | |
| A | EP-A-0 037 001  (SIEMENS)<br>* Zusammenfassung; Seite 8, Zeile 22 - Seite 10, Zeile 3; Figuren 3,4,6 *<br>– – – – – | 1,2,5 | |

RECHERCHIERTE
SACHGEBIETE (Int. Cl.5)

H 02 M
H 02 J

Der vorliegende Recherchenbericht wurde für alle Patentansprüche erstellt

| Recherchenort | Abschlußdatum der Recherche | Prüfer |
|---|---|---|
| Den Haag | 11 März 91 | GENTILI L. |